# EUROPÄISCHE PATENTSCHRIFT

(11) **EP 1 629 225 B1**
(45) Veröffentlichungstag und Bekanntmachung des Hinweises auf die Patenterteilung: **15.12.2010**
(21) Anmeldenummer: 04739389.7
(22) Anmeldetag: 27.05.2004
(51) Int. Cl.: F16K 3/26, F15B 11/042, F15B 1/02

(54) **DRUCKABHÄNGIGES SPERRVENTIL UND HYDRAULIKSYSTEM MIT EINEM SOLCHEN**
PRESSURE-DEPENDENT CHECK VALVE AND HYDRAULIC SYSTEM EQUIPPED THEREWITH
VANNE D'ARRET REAGISSANT A LA PRESSION ET SYSTEME HYDRAULIQUE COMPRENANT UNE VANNE D'ARRET DE CE TYPE

(30) Priorität: 04.06.2003 DE 10325202
(43) Veröffentlichungstag der Anmeldung: 01.03.2006
(73) Patentinhaber: Eaton Fluid Power GmbH, 76532 Baden-Baden (DE)
(72) Erfinder: ZIMPFER, Michael, 76275 Ettlingen (DE); HILGERT, Andreas, Richard, 76547 Sinzheim (DE)
(74) Vertreter: Leadbetter, Benedict
(86) Internationale Anmeldenummer: PCT/EP2004/005712
(87) Internationale Veröffentlichungsnummer: WO 2004/109166

(56) Entgegenhaltungen:
- DE-C- 19 642 837
- FR-A- 2 397 578
- GB-A- 102 688
- US-A- 3 472 278

## Beschreibung

Die Erfindung betrifft ein Schieberventil für Hydrauliksysteme sowie ein solches Hydrauliksystem.

In Hydrauliksystemen kommt es häufig darauf an, druck- oder durchströmungsabhängig Zweige zu- oder abzuschalten. Dies ist beispielsweise dazu erforderlich, um von verschiedenen Betriebszuständen abhängige unterschiedliche Dämpfungsmaßnahmen zu treffen.

Beispielsweise ist aus der DE 196 42 837 Cl ein hydraulisches Lenkhilfesystem (Servolenkung) bekannt, das dazu eingerichtet ist, dem Fahrer einerseits ein gutes Gefühl für die Straße, d.h. eine im Lenkrad spürbare Rückmeldung über die auf die Räder einwirkenden Kräfte zu geben und andererseits grobe, von Fahrbahnstößen herrührende Schläge von dem Lenkrad fern zu halten. Dazu ist an der Spurstange ein Hydraulikzylinder vorgesehen, dessen beiden Arbeitskammern bei Geradeausfahrt über einen Steuerventilblock und eine Kurzschlussleitung miteinander verbunden sind. In der Kurzschlussleitung sind zwei Dämpferventile angeordnet, die bezüglich des Kurzschlusses in Serie geschaltet sind. Sie enthalten ein scheibenförmiges Ventilverschlussglied, das auf einem axial verschiebbaren Bolzen angeordnet ist und das von dem Ölstrom umspült wird. Übersteigt die Strömung ein gewisses Maß nimmt diese das Ventilverschlussglied mit und drängt es gegen einen ihm zugeordneten Ventilsitz. In gleichem Maße wirkt eine auf seinen Trägerstift einwirkende Druckdifferenz. Liegt das Ventilverschluss an seinem Ventilsitz an sind nur noch relativ enge Drosselkanäle frei, so dass der Fluidstrom wesentlich gedrosselt wird.

Dieses Ventil reagiert sowohl auf Druckdifferenzen als auch auf hohe Durchströmungen. Es existieren jedoch Anwendungsfälle, in denen das Ventil nur druckabhängig, nicht aber durch zunehmende Durchströmung schalten soll. Zudem sollen solche Ventile häufig hysteresefrei oder hysteresearm arbeiten und eine auf Dauer wohldefinierte Ansprechschwelle haben.

Aus der FR 2397578 ist ein Überdruckventil bekannt, das als Schieberventil ausgebildet ist. Es ist im Ruhezustand geschlossen und öffnet, wenn der Druck an der zuführenden Leitung einen Grenzwert überschreitet. Dazu ist in einer quer zu dem Durchgangskanal des Ventilkörpers orientierten Schieberbohrung ein Schieber angeordnet, der an einem Ende einen Kopf und an dem anderen Ende einen länglichen becherartigen Sperrabschnitt aufweist. Sowohl der Sperrabschnitt als auch der Kopf teilen in der Querbohrung jeweils eine Kammer ab. Die von dem Kopf abgeteilte Kammer steht mit dem Durchgangskanal in Verbindung, so dass der Kopfdruck beaufschlagt ist. Die von dem Schieberabschnitt abgegrenzte Kammer steht mit einem Außenanschluss oder der Umgebung in Verbindung. Die betreffende Kammer ist somit druckentlastet. Der Sperrabschnitt nimmt eine Druckfeder auf, die die Neigung hat, den Sperrabschnitt in Sperrstellung zu bewegen. Überschreitet der in dem Durchgangskanal vorhandene Druck einen Grenzwert, der einer Kraft entspricht, die der Kraft der Druckfeder zumindest ebenbürtig ist wird der Schieber in Offenstellung verschoben. Das Ventil wirkt als Überdruckventil.

Außerdem ist aus der GB 102688 ein Regulierventil mit einem verschiebbar gelagerten Kolben bekannt, der eine Dichtkante aufweist und der zu einer Abdichtfläche und von dieser weg bewegbar ist. Es handelt sich um ein Sitzventil. Der Kolben ist durch eine Feder in Öffnungsrichtung vorgespannt und wird bei Druckbeaufschlagung graduell oder ganz geschlossen.

Davon ausgehend ist es Aufgabe der Erfindung, ein einfaches und robustes Ventil zu schaffen, das druckabhängig schaltet.

Diese Aufgabe wird mit dem Schieberventil nach Anspruch 1 gelöst:

Das erfindungsgemäße Schieberventil weist ein Ventilgehäuse mit einem Durchgangskanal auf. Quer zu diesem ist eine Schieberbohrung angeordnet in der ein Schieber sitzt. Ein Kopf desselben wirkt als Antrieb für den Schieber. Seine entsprechende Wirkfläche ist parallel zu der den Durchgangskanal durchquerenden Strömung ausgerichtet. An seinem gegenüber liegenden Ende weist der Schieber einen Sperrabschnitt auf, so dass der Durchgangskanal zwischen zwei vorzugsweise im Wesentlichen gleich großen und z.B. ringförmig ausgebildeten Flächen des Schiebers hindurchführt. Beide Flächen sind parallel zueinander orientiert, so dass eine durch den Durchgangskanal fließende Strömung keine Druckdifferenz und somit keine auf den Schieber in Schließrichtung wirkende resultierende Kraft erzeugen kann. In Folge dessen kann der Schieber nicht durch die den Durchgangskanal durchfließende Strömung geschlossen werden.

Der Kopf und der Sperrabschnitt teilen in der Schieberbohrung jeweils eine Kammer ab. Während die von dem Kopf abgeteilte Kammer vorzugsweise druckentlastet ist steht die von dem Sperrabschnitt abgeteilte Kammer vorzugsweise mit dem Fluiddruck des Durchgangskanals in Verbindung. Dadurch sind die in den beiden entgegen gesetzten Bewegungsrichtungen des Schiebers orientierten druckbeaufschlagten Flächen insgesamt unterschiedlich groß, wodurch an dem Schieber bei Druckbeaufschlagung des Durchgangskanals eine resultierende Kraft entsteht. Somit wird ein rein druckabhängiges Schieberventil erhalten. Die von dem Sperrabschnitt abgeteilte Kammer ist über einen vorzugsweise rechtwinklig von dem Durchgangskanal abzweigenden Kanal an den Durchgangskanal angeschlossen. Dadurch erhält die von dem Sperrabschnitt abgeteilte Kammer mit zunehmender Durchströmung des Durchgangskanals einen verminderten statischen Druck, was eine in Öffnungsrichtung des Schiebers wirkende Kraft zur Folge hat. Erst wenn diese Kraft und die Federkraft durch den Druck in dem Durchgangskanal überwogen werden beginnt sich der Schieber in Schließrichtung zu bewegen. Mit abnehmender Durchströmung vermindert sich die Sogwirkung, die den Druck in der von dem Sperrabschnitt abgeteilten Kammer etwas vermindert und somit eine in Öffnungsrichtung wirkende Kraft erzeugt hat. Mit Wegfall dieser Kraft schließt das Schieberventil schneller. Es kommt insgesamt zu einem schalterartigen Schließen des Schieberventils.

Das Schieberventil kann z.B. in einem Hydrauliksystem dazu eingesetzt werden, um druckabhängig verschiedene Dämpfer zu- oder abzuschalten. Die Dämpfer sind vorzugsweise Resonatoren, die auf verschiedene last- und somit druckabhängig auftretende Pulsationen abgestimmt sind.

Vorzugsweise ist die von dem Kopf in der Schieberbohrung abgeteilte Kammer nach außen belüftet. Sie kann, wenn auf eine öldichte Lagerung des Kolbens in der Schieberbohrung verzichtet werden soll, jedoch auch über eine Entlastungsleitung mit einer Ölsammelleitung verbunden werden, die beispielsweise an die Saugseite einer Hydraulikpumpe angeschlossen ist. Es kann dann auf besondere Abdichtungsmaßnahmen verzichtet werden und der Schieber kann besonders leichtgängig gelagert werden. Dies hat insbesondere Vorzüge wenn das Ventil besonders schnell ansprechen soll oder auf sehr geringe Drücke reagieren soll.

Die Schieberbohrung weist vorzugsweise einen Durchmesser auf, der etwas größer ist als der des Durchgangskanals. Dadurch kann der Schieber den Durchgangskanal völlig absperren. Es wird dann ein Auf/Zu-Ventil erhalten. Wenn lediglich eine Drosselung des Durchgangskanals gewünscht ist kann der Schieberabschnitt mit einer Umfangsnut versehen sein oder der Durchmesser des Schieberkanals geringer als der des Durchgangskanals gewählt werden.

Zur federnden Vorspannung des Schiebers auf die Offenstellung des Ventils hin ist vorzugsweise eine Feder vorgesehen, die in der belüfteten oder mit einer Ölabfuhrleitung verbundenen von dem Kopf abgeteilten Kammer angeordnet ist. Sie stützt sich als Druckfeder mit einem Ende an dem Kopf und mit ihrem anderen Ende an einem Widerlager ab, das beispielsweise durch eine Schraube zum Verschluss der betreffenden Kammer gebildet sein kann. Bei einer verfeinerten Ausführungsform kann die Schraube als Einstellschraube dienen, um den Auslösedruck des Schieberventils beeinflussen zu können. Die Feder ist vorzugsweise vorgespannt, um bei allmählichem Druckanstieg lange Zeit keine Reaktion und dann eine plötzliche Bewegung des Schiebers in Sperrrichtung zu erhalten.

Der Sperrabschnitt weist vorzugsweise einen Durchmesser auf, der etwas geringer ist als der des den Kopf aufnehmenden Abschnittes der Schieberbohrung, so dass die Schieberbohrung mit dem Sperrabschnitt einen Drosselspalt festlegt. Dieser vermindert Zeitverzögerungen beim Schließen des Ventils bei Druckabfall, d.h. bei Unterschreiten des Schaltdrucks. Der Drosselspalt steht gegebenenfalls über den durch den Sperrabschnitt führenden Kanal mit der von dem Sperrabschnitt abgeteilten Arbeitskammer in Verbindung, um diese druck zu entlasten, wenn der Druck im Durchgangskanal abfällt. Der Kanal muss jedoch nicht zwangsläufig durch den Sperrabschnitt führen. Er kann auch in dem Ventilgehäuse untergebracht sein. Die Abschaltzeit des Ventils ist dann unabhängig von der Größe des Drosselspalts.

Das erfindungsgemäße Schieberventil kann in einem Hydrauliksystem zwischen einer Hydraulikpumpe und einer Last oder genauer zwischen einer Hydraulikpumpe und einem der Last vorgeschalteten Hauptventilblock zum Aktivieren und Deaktivieren von Resonatoren vorgesehen sein. Die Resonatoren sind vorzugsweise zwischen der Pumpe und der Last bzw. der Pumpe und dem Hauptventilblock angeordnet und dienen der Dämpfung von Druckpulsationen. Die Pulsationen treten beispielsweise bei höherer Last auf wenn die Pumpe über den Hauptventilblock teilweise oder vollständig mit der Last verbunden wird. Das Schieberventil kann hier ein schnelles Umschalten der dämpfenden Resonatoren bewirken. Dies kann unabhängig von dem von der Pumpe geförderten Massenstrom geschehen, der vor dem Hauptventilblock nicht von der Last sondern allenfalls von der Pumpendrehzahl abhängig ist.

Weitere Einzelheiten vorteilhafter Ausführungsformen der Erfindung ergeben sich aus der Zeichnung, aus der Beschreibung oder aus Unteransprüchen.

In der Zeichnung sind Ausführungsbeispiele der Erfindung veranschaulicht. Es zeigen:
- Figur 1: ein Hydrauliksystem mit einem erfindungsgemäßen Schieberventil in schematisierter Darstellung,
- Figur 2: das Schieberventil nach Figur 1 in schematisierter, längs geschnittener Darstellung in Offenstellung,
- Figur 3: das Schieberventil nach Figur 2 in Schließstellung,
- Figur 4: eine abgewandelte Ausführungsform eines Schieber- ventils in längs geschnittener, schematisierter Darstellung und in Offenstellung und
- Figur 5: das Schieberventil nach Figur 4 in Schließstellung.

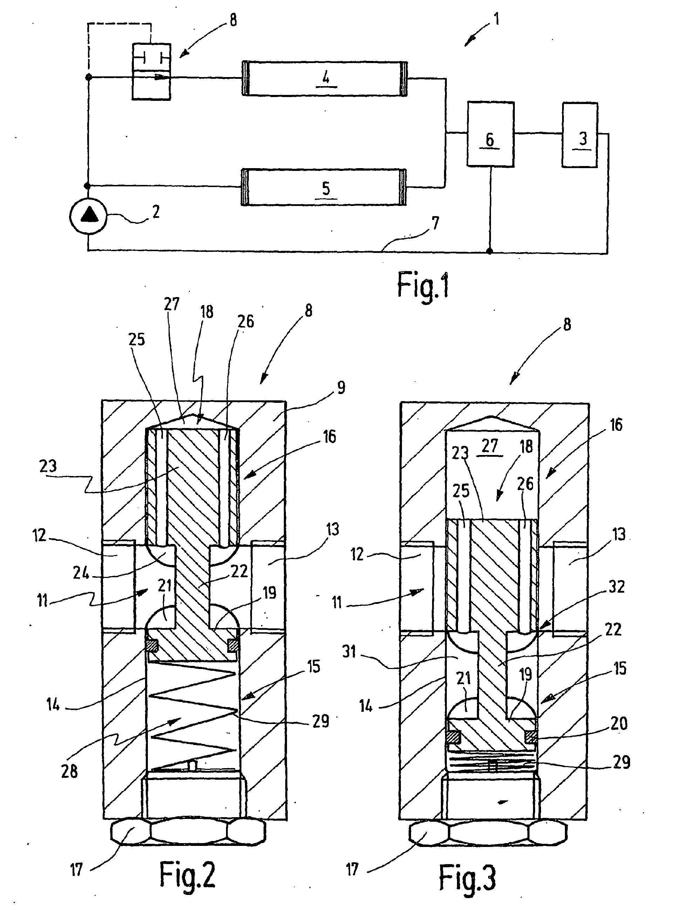

In Figur 1 ist ein Hydrauliksystem 1 veranschaulicht, zu dem eine Hydraulikpumpe 2 und ein Verbraucher bzw. eine Last 3 beispielsweise in Form eines Hydraulikzylinders gehören. Das Hydrauliksystem 1 kann ein Lenkhilfesystem eines Kraftfahrzeugs oder ein anderweitiges vergleichbares System sein. Zu dem Hydrauliksystem 1 gehören außerdem beispielsweise zwei Dämpfer 4, 5, die beispielsweise als Resonatordämpfer ausgebildet sind. Die Dämpfer 4, 5 sind ausgangsseitig parallel geschaltet und mit einem Hauptventilblock 6 verbunden. Er weist einen mit den beiden Dämpfern 4, 5 verbundenen Eingang, einen zu der Last 3 führenden Ausgang und einen weiteren Ausgang auf, der zu einer Rücklaufleitung 7 führt. Letztere ist mit dem Sauganschluss der Hydraulikpumpe 2 verbunden. Ihr druckseitiger Anschluss verzweigt sich zum einen zu dem Dämpfer 5 und zum anderen zu einem Schieberventil 8, das dem Dämpfer 4 vorgeschaltet ist. Das Schieberventil 8 ist bei relativ niedrigen Drücken auf Durchgang geschaltet während es bei Übersteigen einer eingestellten Druckgrenze sperrt. Verbindet der Hauptventilblock 6 die Ausgänge der Dämpfer 4, 5 direkt mit der Rücklaufleitung 7 und somit mit dem Sauganschluss der Hydraulikpumpe 2, steht das Schieberventil 8 auf Durchgang, so dass beide Dämpfer 4, 5 parallel geschaltet sind. Die Dämpfer 4, 5 können in ihrem Durchflusswiderstand übereinstimmen oder auch voneinander abweichen. In parallel geschaltetem Zustand bieten sie insgesamt einen geringen Durchflusswiderstand. Insbesondere der Dämpfer 4 kann einen besonders niedrigen Durchflusswiderstand aufweisen.

Schaltet der Hauptventilblock 6 die Ausgänge der Dämpfer 4, 5 mehr oder weniger auf die Last 3 steigt der Druck zwischen der Last 3 und dem Ausgang der Hydraulikpumpe 2 an. Übersteigt er dabei einen Grenzwert sperrt das Schieberventil, wodurch der Dämpfer 4 inaktiv wird. Der gesamte von der Hydraulikpumpe 2 geförderte Fluidstrom muss nun den Dämpfer 5 durchfließen, der einen höheren Durchflusswiderstand haben kann und dazu eingerichtet ist, die unter Last auftretenden Pulsationen möglichst vollständig zu dämpfen. Der nunmehr auftretende Durchflusswiderstand spielt hinsichtlich der Energieverluste in dem Hydrauliksystem 1 eine untergeordnete Rolle, weil er nur temporär auftritt.

Der Aufbau des Schieberventils 8 geht aus den Figuren 2 und 3 hervor, auf die nunmehr Bezug genommen wird.

Das Schieberventil 8 weist ein Ventilgehäuse 9 auf, durch das ein Durchgangskanal 11 führt. Dieser ist beispielsweise als gerade zylindrische Bohrung ausgebildet, die an den beiden Mündungen jeweils mit Innengewinde 12, 13 versehen ist, um den Anschluss von Leitungen zu ermöglichen. Quer zu dem Durchgangskanal 11 ist eine Schieberbohrung 14 angelegt, die den Durchgangskanal 11 rechtwinklig und zentral schneidet. Der Durchmesser der Schieberbohrung 14 ist vorzugsweise mindestens so groß wie der des Durchgangskanals 11 oder größer. Ist der Durchmesser der Schieberbohrung 14 geringer als der des Durchgangskanals 11 wird beim Sperren des Schieberventils 8 kein vollständiges Schließen sondern lediglich ein starkes Drosseln der durchgehenden Strömung erreicht. Auch dies kann gewünscht sein.

Die Schieberbohrung 14 weist einen ersten Abschnitt 15 in den Figuren 2 und 3 unterhalb des Durchgangskanal 11 und einen zweiten Abschnitt 16 in den Figuren 2 und 3 oberhalb des Durchgangskanals 11 auf. Die vorzugsweise zylindrische Schieberbohrung 14 ist wiederum vorzugsweise als Sackbohrung ausgebildet und somit einseitig geschlossen. An ihrem offenen Ende ist sie z.B. durch eine Justier- oder Verschlussschraube 17 geschlossen.

In der Schieberbohrung 14 sitzt ein Schieber 18, der im Wesentlichen rotationssymmetrisch ausgebildet und quer zu dem Durchgangskanal verschiebbar gelagert ist. Der Schieber 18 weist einen flachen zylindrischen und somit scheibenartigen Kopf 19 auf, der in dem Abschnitt 15 der Schieberbohrung 14 sitzt. Der Außendurchmesser des Kopfs 19 ist geringfügig geringer als der Durchmesser der Schieberbohrung 14. Er sitzt abgedichtet dabei aber verschiebbar in dieser. An seiner dem Durchgangskanal 11 zugewandten Seite weist der Kopf 19 eine ebene Ringfläche oder, wie Figur 2 und 3 andeuten, eine sattelförmige Fläche 21 auf. Sie kann so geformt sein, dass sie bei der in Figur 2 veranschaulichten Position des Schiebers 18 glatt an die zylindrische Wandung des Durchgangskanals 11 anschließt, um die hier fließende Strömung wenig zu stören und somit einen geringen Durchflusswiderstand zu produzieren.

Von dem Kopf 19 ragt mittig ein Stiftabschnitt 22 auf, der vorzugsweise einstückig mit dem Kopf 19 verbunden ist. Der Stiftabschnitt 22 weist einen Durchmesser auf, der wesentlich geringer ist als der des Kopfs 19. Er ist so gewählt, dass er den freien Strömungsquerschnitt des Durchgangskanals 11 möglichst wenig beeinträchtigt. Die Länge des Stiftabschnitts 22 entspricht vorzugsweise dem Durchmesser des Durchgangskanals 11. An seinem von dem Kopf 19 abliegenden Ende trägt der Stiftabschnitt 22 einen vorzugsweise einstückig angeformten Sperrabschnitt 23, der im Wesentlichen als zylindrischer Kolben ausgebildet ist und mit geringem Spiel axial verschiebbar in dem Abschnitt 16 der im Ganzen zylindrischen Schieberbohrung 14 sitzt. Seine Länge ist größer als der Durchmesser des Durchgangskanals 11 und somit auch länger als der Stiftabschnitt 22. An seiner dem Durchgangskanal 11 zugewandten Seite ist der Sperrabschnitt 23 mit einer ebenen Ringfläche oder, wie in den Figuren 2 und 3 veranschaulicht, mit einer sattelförmigen Ringfläche 24 versehen, die den Stiftabschnitt 22 umgibt und der zylindrischen Kontur der Wandung des Durchgangskanals 11 folgt. Dadurch schließt die Ringfläche 24 glatt und stufenfrei an die Wandung des Durchgangskanals 11 an, wenn sich der Schieber 18 in der in Figur 2 dargestellten Stellung befindet.

Den Kopf 19 durchsetzen ein, zwei oder mehrere Kanäle 25, 26 in Längsrichtung. Diese Kanäle führen somit aus dem Durchgangskanal 11 in eine Kammer 27, die der Sperrabschnitt 23 in den Abschnitt 16 der Schieberbohrung 14 abteilt. Der Sperrabschnitt 23 weist zur Begrenzung der Kammer eine ebene Endfläche auf.

Der Kopf 19 teilt in dem Abschnitt 15 der Schieberbohrung 14 eine Kammer 28 ab, in der eine Druckfeder 29 angeordnet ist. Diese stützt sich mit einem Ende an der Stirnfläche des Kopfs 19 und mit ihrem anderen Ende an der Justier- oder Verschlussschraube 17 ab. Die Kammer 28 kann nach außen belüftet sein beispielsweise durch eine nicht weiter veranschaulichte Zentralbohrung der Justier- oder Verschlussschraube oder durch einen anderweitigen Kanal. Der Kopf 19 ist vorzugsweise abgedichtet in der Schieberbohrung 14 gelagert. Dazu weist der an seiner äußeren zylindrischen Mantelfläche eine Ringnut auf, in der ein Dichtungselement, beispielsweise ein O-Ring 20 sitzt. Anstelle desselben können auch Lippendichtungen oder anderweitige Dichtungselemente vorgesehen werden. Zur Unterstützung des O-Rings oder des anderweitigen Dichtungselements kann ein Stützring vorgesehen werden. Dieser ist nicht veranschaulicht. Ist der Kopf 19 jedoch nicht fluiddicht gegen die Wandung der Schieberbohrung 14 abgedichtet, ist die Kammer 28 mit einer Ölabflussleitung verbunden, die zu dem Sauganschluss der Hydraulikpumpe 2 führt.

Das insoweit beschriebene Schieberventil 8 arbeitet wie folgt:

Steht in dem Durchgangskanal 11 Fluid mit niedrigem Druck an, befindet sich der Schieber 18 in der in Figur 2 veranschaulichten Position. Die Druckfeder 29 hält den Schieber in seiner oberen Position, die eine Durchlassposition ist. Das Hydraulikfluid nimmt den Durchgangskanal 11 wie auch die Kanäle 25, 26 und die Kammer 27 ein. In die Kammer 28 dringt es jedoch in Folge der abgedichtet Lagerung des Kopfs 19 nicht vor. Gegen die Kraft der Druckfeder 29 wird eine von dem Fluiddruck hervorgerufene Kraft, die sich aus dem Fluiddruck und der von dem Kopf 19 beschriebenen Kreisfläche berechnet. Dies deshalb, weil gegen die Kraft der Druckfeder 29 der Fluiddruck wirkt, soweit er auf die Fläche 21 einwirkt sowie auf einen Abschnitt der oberen Stirnfläche des Sperrabschnitts 23. Die äußere Ringzone derselben ist durch die Ringfläche 24 kompensiert, wohingegen ein der Querschnittsfläche des Stiftabschnitts 22 entsprechender Flächenanteil unkompensiert bleibt und somit zur Kraft in Öffnungsrichtung beiträgt.

Nimmt die Strömung, d.h. die Fließgeschwindigkeit in dem Durchgangskanal 11 zu wirkt sowohl auf die Fläche 21 als auch auf die Ringfläche 24 ein verminderter Druck. Dieser wirkt über die Kanäle 25, 26 auch in der Kammer 27 druckmindernd, so dass der Schieber 18 noch sicherer in Offenstellung gehalten wird. Eine vergrößerte Durchströmung kann somit nicht zum urplötzlichen und nicht gewünschten Schließen des Schieberventils 8 führen.

Nimmt der statische Druck in dem Durchgangskanal 11 hingegen über eine Druckgrenze hinweg zu, die als Schaltgrenze dient, verschiebt sich der Schieber in die Position gemäß Figur 3. Dies kommt zustande wenn der auf den Kreisquerschnitt des Kopfs 19 wirkende Druck eine Kraft erzeugt, die die Kraft der Druckfeder 29 übersteigt. Diese Kraft wirkt bis die untere Kante des Sperrabschnitts 23 die untere Begrenzung des Durchgangskanals 11 erreicht hat. Dabei kann der Sperrabschnitt 23, wie Figur 3 veranschaulicht, eine den Stift 22 umschließende ringförmige Kammer 31 vollständig von dem Durchgangskanal 11 abtrennen. Ist dies der Fall, ist das von der Kammer 27 und der Kammer 31 sowie den Kanälen 25, 26 aufgenommene Fluid im Wesentlichen druckentlastet. Der Druckfeder 29 steht in diesem Zustand keine Kraft mehr entgegen. In Folge dessen bewegt sich der Schieber 18 so weit zurück, dass die Kammer 31 gerade eben von dem Durchgangskanal 11 abgeschlossen ist. Es entsteht zwischen dem Außenumfang des Sperrabschnitts 23 und der inneren Wandung des Abschnitts 15 der Schieberbohrung 14 ein Drosselspalt 32, der an der in Figur 3 bezeichneten Stelle den Wert Null erreicht. Diese Stelle wird durch eine gedachte Ebene erfunden, die sowohl die Achse des Durchgangskanals 11 als auch die Achse der Schieberbohrung 14 enthält. Diese Ebene markiert an der Wandung des Durchgangskanals 11, wie auch an dem Mantel des Sperrabschnitts 23 eine Linie. Wo sich diese Linien treffen ist genau die Stelle anzutreffen, bei der der Drosselspalt den Wert Null annimmt. Diese Position regelt der Schieber 18 automatisch ein, so lange der Druck in dem Durchgangskanal 11 den Abschaltwert übersteigt. So lange dies der Fall ist, wird dieser Druck über den auf Null eingeregelten Drosselspalt 32 auch an die Kammer 31 weiter gegeben. Fällt der Druck hingegen unter diesen Schaltdruck ab, wird über den Drosselspalt 32 auch die Kammer 31 und mit ihr die Kammer 27 entlastet, wodurch die Druckfeder 29 den Schieber 18 ohne störende Zeitverzögerung in seine Ausgangslage gemäß Figur 2 zurück befördert. Der Durchgangskanal 11 ist nunmehr wieder freigegeben.

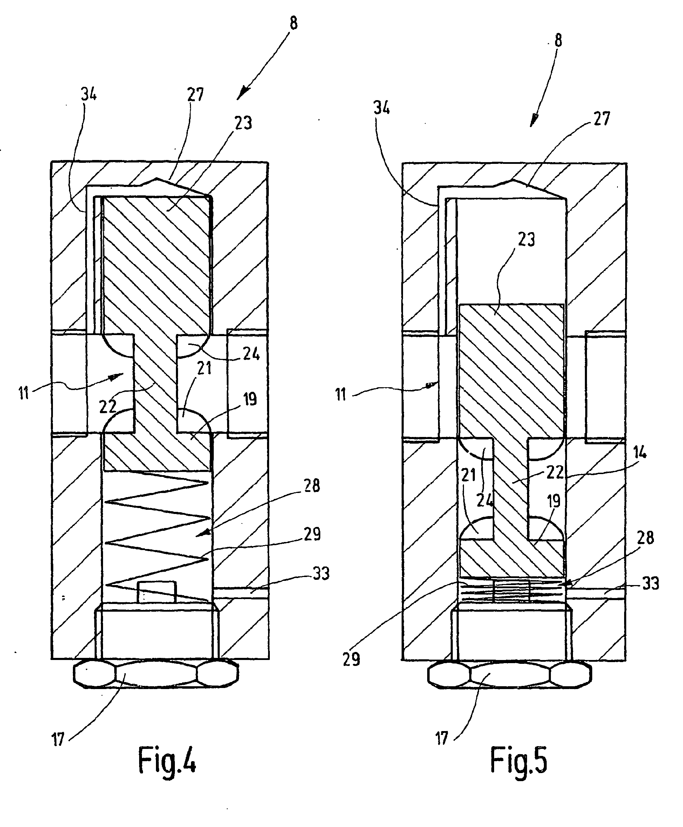

Die Figuren 4 und 5 veranschaulichen eine abgewandelte Ausführungsform des erfindungsgemäßen Schieberventils 8. Soweit in diesen beiden Figuren die gleichen Bezugszeichen verwendet sind wie bei den vorstehend beschriebenen Figuren gilt die Beschreibung sowohl des Aufbaus als auch der Funktion entsprechend. Die Unterschiede sind im Folgenden erläutert:

Die Kammer 28 ist mit einer Entlastungsbohrung 33 versehen, die im Falle einer abgedichteten Lagerung des Kopfs 19 ins Freie und ansonsten zu einer Ölsammelleitung führt. Der Kopf 19 kann, wie bereits im Zusammenhang mit den Figuren 2 und 3 erläutert, bedarfsweise durch ein Dichtungselement, wie beispielsweise einen O-Ring, gegen die Schieberbohrung 14 abgedichtet sein. Er kann jedoch auch mit geringer Leckage in der Schieberbohrung 14 sitzen, wenn die Entlastungsbohrung 33 an eine Ölsammelleitung angeschlossen ist.

Des Weiteren fehlen dem Sperrabschnitt 23 die Kanäle 25, 26. Diese sind durch einen Umgehungskanal 34 ersetzt, der ausgehend von dem Durchgangskanal 11 in die Kammer 27 führt. Wie bei dem vorstehend beschriebenen Ausführungsbeispiel sind die mit der Strömung in Berührung stehenden Flächen (Fläche 21 sowie Ringfläche 24) parallel zu der durchfließenden Strömung und somit parallel zu der Wandung des Durchgangskanals 11 orientiert, so dass die gerade durch den Durchgangskanal 11 fließende Strömung keine Gesamtkraft auf diese Flächen ausübt. Die Fläche 21 ist dabei symmetrisch zu der Ringfläche 24 angeordnet und bezüglich einer den Stiftabschnitt 22 rechtwinklig schneidenden Mittelebene. Jede in Folge der Durchströmung an der Fläche 21 erzeugte Kraft wird somit von der entgegen gesetzt gerichteten gleich großen Kraft kompensiert, die an der Ringfläche 24 erzeugt wird. Dies gilt entsprechend für die vorbeschriebene Ausführungsform. In diesem Sinne ist auch der Stiftabschnitt 22 zylindrisch ausgeführt.

Der Umgehungskanal 34 zweigt, wie die Kanäle 25, 26, quer von dem Durchgangskanal 11 ab und vermittelt somit den an der Wand wirkenden statischen Druck zu der Kammer 27.

Hinsichtlich der Funktion ergibt ein Unterschied dahingehend, dass die Kammer 27 im Sperrzustand des Schieberventils 8 (Figur 5) nicht über dem Drosselspalt 32 sondern direkt über den Umgehungskanal 34 mit dem statischen Druck beaufschlagt wird. Der Sperrabschnitt 23 kann deshalb ungehemmt in Sperrrichtung bewegt werden bis der Kopf 19 einen Anschlag findet. Dieser kann beispielsweise an der Justier- und Verschlussschraube 17 ausgebildet sein. Die Druckentlastung der Kammer 27 erfolgt ebenfalls über den Umgehungskanal 34.

Wie bei dem vorbeschriebenen Beispiel auch, wirkt in Offenstellung über den Umgehungskanal 34 ein gewisser Sog auf die Kammer 27 wenn die Durchströmung durch den Durchgangskanal 11 groß ist. Mit beginnendem Sperrvorgang nimmt dieser Sog jedoch ab, wodurch die den Schieber 18 bislang in Offenstellung haltende und somit die Druckfeder 29 unterstützende Kraft wegfällt. Dieser Wegfall führt zu einem plötzlichen schaltenden Schließen des Schieberventils 8. Ebenso bewirkt die Durchströmung durch den Durchgangskanal 11 beim Öffnen eine Beschleunigung des Öffnungsprozesses. Das Schieberventil schließt deshalb schnell und präzise. Zwischenstellungen in denen es zu Schwingungs- und Geräuscherscheinungen kommen könnte werden vermieden.

Das erfindungsgemäße Schieberventil 8 weist einen Schieber 18 auf, der quer zu dem Durchgangskanal 11 beweglich gelagert ist. Er ist insoweit asymmetrisch ausgebildet, als durch geeignete Kanäle 25, 26, 34 in dem Durchgangskanal 11 herrschender Druck auf eine Seite des Schiebers 18 gelangen kann während die andere Seite drucklos oder mit einem konstanten geringeren Druck beaufschlagt ist. Dem Druck entgegen wirkt eine Druckfeder 29, die den Schieber 18 in Offenstellung hält. Überwiegt der Fluiddruck wird der Schieber 18 in Sperrstellung verschoben, in der er so lange verbleibt bis der Druck die Schaltgrenze wieder unterschreitet.

## Patentansprüche

1. Schaltendes Schieberventil (8) für Hydrauliksysteme (1) zum druckabhängigen Umschalten von Dämpfern (4, 5),
mit einem Ventilgehäuse (9), das einen geraden Durchgangskanal (11) mit einer sich quer durch diesen erstreckenden Schieberbohrung (14) aufweist,
mit einem Schieber (18),
- der einen Kopf (19) aufweist, der in der Schieberbohrung (14) längs verschiebbar gelagert ist und in dieser eine Kammer (28) abteilt, und
- der einen Sperrabschnitt (23) aufweist, der mit dem Kopf (19) verbunden und **dadurch** mit diesem zwischen einer Sperrstellung und einer Freigabestellung verstellbar ist und in der Schieberbohrung (14) eine Kammer (27) abgrenzt und an seiner dem Durchgangskanal zugewandten Seite eine mit der Strömung in dem Durchgangskanal (11) in Berührung stehende Ringfläche (24) aufweist
mit einer Druckfeder (29) zur federnden Vorspannung des Schiebers (18),
**dadurch gekennzeichnet,**
**dass** die von dem Kopf (19) abgeteilte Kammer (28) druckentlastet ist,
**dass** die von dem Sperrabschnitt (23) abgeteilte Kammer mit dem Fluiddruck des Durchgangskanals (11) beaufschlagt ist
**dass** die Druckfeder (29) den Schieber (18) auf die Offenstellung des Ventils vorspannt, und
**dass** sich die Druckfeder (29) mit einem Ende an dem Kopf (19) und mit ihrem anderen Ende an einem Widerlager (17) abstützt.

2. Schieberventil nach Anspruch 1, **dadurch gekennzeichnet, dass** der Kopf (19) in der Schieberbohrung (14) abgedichtet gelagert ist.

3. Schieberventil nach Anspruch 1, **dadurch gekennzeichnet, dass** der Kopf (19) in der Schieberbohrung (14) eine nach außen belüftete Kammer (28) abteilt.

4. Schieberventil nach Anspruch 1, **dadurch gekennzeichnet, dass** das Widerlager (17) einstellbar ist.

5. Schieberventil nach Anspruch 3, **dadurch gekennzeichnet, dass** die Druckfeder (29) in der Kammer (28) angeordnet ist.

6. Schieberventil nach Anspruch 1, **dadurch gekennzeichnet, dass** der Sperrabschnitt (23) mit dem Kopf über einen Stiftabschnitt (22) verbunden ist, dessen Durchmesser geringer ist als der Durchmesser des Sperrabschnitts (23).

7. Schieberventil nach Anspruch 1, **dadurch gekennzeichnet, dass** der Sperrabschnitt (23) spielarm in der Schieberbohrung (14) geführt ist.

8. Schieberventil nach Anspruch 1, **dadurch gekennzeichnet, dass** wenigstens ein Kanal (25, 26, 34) vorgesehen ist, der die Kammer (27) mit dem Durchgangskanal (11) verbindet.

9. Schieberventil nach Anspruch 1, **dadurch gekennzeichnet, dass** der Sperrabschnitt (23) einen Durchmesser aufweist, der geringer ist als der Durchmesser des den Kopf (19) aufnehmenden Abschnittes (15) der Schieberbohrung (14), so dass der Abschnitt (15) der Schieberbohrung (14) mit dem Sperrabschnitt (23) einen Drosselspalt (32) festlegt, wenn sich der Sperrabschnitt (23) in Sperrstellung befindet.

10. Schieberventil nach Anspruch 1, **dadurch gekennzeichnet, dass** der Durchmesser der Schieberbohrung (14) wenigstens so groß ist wie der Durchmesser des Durchgangskanals (11).

11. Hydrauliksystem
mit einer Hydraulikpumpe (2), mit einer hydraulischen Last (3) und mit wenigstens zwei zueinander parallelen Dämpfern (4, 5), sowie
mit wenigstens einem Schieberventil (8) nach Anspruch 1, das vor einem der Dämpfer (4, 5) angeordnet ist.

## Claims

1. Slide valve (8) for hydraulic systems (1), for pressure-dependent switching of dampers (4, 5),
with a valve housing (9) having a passage channel (11) with a slide bore (14) extending through said channel,
with a slide (18)
- which has a head (19) supported in the slide bore (14) so as to be movable in a longitudinal direction and which creates a chamber (28) in this, and
- which has a blocking portion (23) which is connected with the head (19) and, as a result of this, can be adjusted with said head between a blocking position and a clearing position, and which delimits a chamber (27) in the slide bore (14), and which has on its side facing the passage channel an annular surface (24) which makes contact with the flow in the passage channel (11)
with a compression spring (29) to pretension the slide (18) in an elastic way, **characterised in that**
the chamber (28) leading from the head (19) is relieved of pressure, and
the chamber separated by the blocking portion (23) is charged by the fluid pressure of the passage channel (11), and
the compression spring (29) pretensions the slide (18) across the opening of the value, and
the compression spring (29) has one end abutting against the head (19) and the other end abutting against an abutment (17).

2. Slide valve as in Claim 1, **characterised in that** the head (19) is supported in a sealed manner in the slide bore (14),

3. Slide valve as in Claim 1, **characterised in that** the head (19) in the slide bore (14) divides a chamber (28) that is vented toward the outside.

4. Slide valve as in Claim 1, **characterised in that** the abutment (17) is adjustable.

5. Slide valve as in Claim 3, **characterised in that** the compression spring (29) is arranged in the chamber (28).

6. Slide valve as in Claim 1, **characterised in that** the blocking portion is connected with the head via a pin portion (22) having a diameter that is smaller than the diameter of the blocking portion (23).

7. Slide valve as in Claim 1, **characterised in that** the blocking portion (23) is guided with little play in slide bore (14).

8. Slide valve as in Claim 1, **characterised in that** at least one channel (25, 26, 34) is provided which connects the chamber (27) with the passage channel (11).

9. Slide valve as in Claim 1, **characterised in that** the blocking portion (23) has a diameter which is smaller than the diameter of the section (15) of the slide bore (14) accommodating the head (19), so that the section (15) of the slide bore (14) defines a damping gap (32) with the blocking portion (23) when the blocking portion (23) is in blocking position.

10. Slide valve as in Claim 1, **characterised in that** the diameter of the slide bore (14) is at least as large as the diameter of the passage channel (11).

11. Hydraulic system
with a hydraulic pump (2), with a load (3) and with at least two branches parallel to each other, as well as with at least two dampers parallel to each other (4, 5), and
with at least one slide valve (8) as in Claim 1, said slide valve being arranged in front of one of the dampers (4, 5).

## Revendications

1. Soupape à coulisse à commutation (8) pour systèmes hydrauliques (1) pour la commutation dépendant de la pression d'amortisseurs (4, 5),
avec une cage de soupape (9) qui présente un canal de passage droit (11) avec un alésage à coulisse (14) s'étendant de manière transversale à travers celui-ci,
avec une coulisse (18),
- qui présente une tête (19) qui est logée dans l'alésage à coulisse (14) de manière à pouvoir être coulissée longitudinalement et divise dans celui-ci une chambre (28), et
- qui présente une section de blocage (23) qui est reliée à la tête (19) et peut ainsi être déplacée avec celle-ci entre une position de blocage et une position de déblocage et délimite dans l'alésage à coulisse (14) une chambre (27) et présente sur son côté tourné vers le canal de passage une surface annulaire (24) en contact avec l'écoulement dans le canal de passage (11),
avec un ressort à pression (29) pour la précontrainte élastique de la coulisse (18), **caractérisée en ce**
**que** la chambre (28) dérivée de la tête (19) est équilibrée en pression,
**que** la chambre divisée par la section de blocage (23) est sollicitée avec la pression fluidique du canal de passage (11),
**que** le ressort à pression (29) met la coulisse (18) en précontrainte sur la position ouverte de la soupape, et
**que** le ressort à pression (29) s'appuie avec une extrémité sur la tête (19) et avec une autre extrémité sur une butée (17).

2. Soupape à coulisse selon la revendication 1, **caractérisée en ce que** la tête (19) est logée de manière étanche dans l'alésage à coulisse (14).

3. Soupape à coulisse selon la revendication 1, **caractérisée en ce que** la tête (19) divise dans l'alésage à coulisse (14) une chambre (28) aérée vers l'extérieur.

4. Soupape à coulisse selon la revendication 1, **caractérisée en ce que** la butée (17) est réglable.

5. Soupape à coulisse selon la revendication 3, **caractérisée en ce que** le ressort à pression (29) est disposé dans la chambre (28).

6. Soupape à coulisse selon la revendication 1, **caractérisée en ce que** la section de blocage (23) est reliée à la tête par le biais d'une section de cheville (22) dont le diamètre est inférieur au diamètre de la section de blocage (23).

7. Soupape à coulisse selon la revendication 1, **caractérisée en ce que** la section de blocage (23) est guidée avec un faible jeu dans l'alésage à coulisse (14).

8. Soupape à coulisse selon la revendication 1, **caractérisée en ce qu'**au moins un canal (25, 26, 34) qui relie la chambre (27) au canal de passage (11), est prévu.

9. Soupape à coulisse selon la revendication 1, **caractérisée en ce que** la section de blocage (23) présente un diamètre qui est inférieur au diamètre de la section (15) de l'alésage à coulisse (14) recevant la tête (19), de sorte que la section (15) de l'alésage à coulisse (14) définit avec la section de blocage (23) une fente d'étranglement (32) lorsque la section de blocage (23) se trouve en position de blocage.

10. Soupape à coulisse selon la revendication 1, **caractérisée en ce que** le diamètre de l'alésage à coulisse (14) est au moins aussi grand que le diamètre du canal de passage (11).

11. Système hydraulique
comprenant une pompe hydraulique (2) avec une charge hydraulique (3) et avec au moins deux amortisseurs (4, 5) parallèles, ainsi
qu'au moins une soupape à coulisse (8) selon la revendication 1, qui est disposée avant un des amortisseurs (4, 5).
